# EUROPEAN PATENT SPECIFICATION

(11) **EP 4 489 426 B1**
(45) Date of publication and mention of the grant of the patent: **24.12.2025**
(21) Application number: 23183366.6
(22) Date of filing: 04.07.2023
(51) Int. Cl.: H04Q 11/00

(54) **L4S SERVICE IN A PASSIVE OPTICAL NETWORK**
L4S-DIENST IN EINEM PASSIVEN OPTISCHEN NETZWERK
SERVICE L4S DANS UN RÉSEAU OPTIQUE PASSIF

(43) Date of publication of application: 08.01.2025
(73) Proprietor: Nokia Solutions and Networks Oy, 02610 Espoo (FI)
(72) Inventor: TSIAFLAKIS, Paschalis, 2223 Schriek (BE); DE SCHEPPER, Koen, 3190 Boortmeerbeek (BE); Werner, COOMANS, 1731 Zellik (BE)
(74) Representative: IP HILLS NV

(56) References cited:
- EP-A1- 4 161 030
- FRAN�OIS FREDRICX NOKIA BELGIUM: "ITU-T Rec. Series G Supplement CO DBA: OLT Capabilities for supporting CO DBA (for Agreement);TD717/PLEN", vol. 2/15, 30 March 2021 (2021-03-30), pages 1 - 32, XP044309224, Retrieved from the Internet <URL:https://www.itu.int/ifa/t/2017/sg15/docs/210412/td/ties/plen/T17-SG15-210412-TD-PLEN-0717!!MSW-E.docx> [retrieved on 20210330]

## Description

### Field of the Invention

Various example embodiments relate to managing a L4S traffic flow within a passive optical network.

### Background of the Invention

Low latency, low loss, and scalable throughput, also referred to as L4S, is a service that enables senders to transmit L4S packets to a receiver over a network with low queuing latency, low congestion loss, and scalable throughput control. Scalable congestion control is implemented at the sender of the L4S packets in combination with a marking protocol to enable a low latency and high throughput traffic flow for a dedicated L4S service or application, i.e. a service latency and a service bandwidth.

The packets of some traffic flows can travel over a passive optical network, PON, for a leg of their journey between the sender and the receiver, e.g. between a client device and a server. In a PON, packets are transmitted upstream from an optical network unit, ONU, to an optical line terminal, OLT, during scheduled transmission opportunities or bursts. The bandwidth and latency associated with the transmission opportunities are dynamically assigned by a dynamic bandwidth allocation, DBA, engine, according to the network activity within the PON.

The service latency and service bandwidth offered by a L4S service can typically not be guaranteed when the L4S packets travel over a PON, as the L4S traffic flow is hindered by the dynamic bandwidth and latency assignment mechanism of the DBA engine. EP 4 161 030 A1 discloses a method for determining a burst schedule for a queue buffer of an ONU by an OLT, the method comprising: determining based on one or more variables a relationship between bandwidth efficiency and latency for communication of contents of the queue buffer with an optical line terminal via an optical distribution network, and determining a burst schedule for the queue buffer based on the determined relationship. FRANÇOIS FREDRICX NOKIA BELGIUM: "ITU-T Rec. Series G Supplement CO DBA: OLT Capabilities for supporting CO DBA (for Agreement);TD717/PLEN",ITU-T DRAFT; STUDY PERIOD 2021-2024 discloses a cooperative DBA (CO DBA) method to reduce the upstream latency in a PON when applying variable bandwidth allocations to follow a variable bitrate traffic.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to enable upstream transmission of L4S traffic within a passive optical network.

This object is achieved, according to a first example aspect of the present disclosure, by an optical line terminal, OLT as set out in claim 1.

A transmission queue within an ONU receives data packets from a connected service or application. Data packets within a transmission queue await their turn to be transmitted to the OLT during an allocated recurrent transmission opportunity. A respective transmission queue is thus allowed to transmit data to the OLT during a dedicated transmission opportunity that recurs in time, i.e. during a repeating timeslot.

The L4S transmission queue is a transmission queue that is associated with a L4S service. An L4S service can offer relatively strict guarantees regarding the latency and bandwidth for traffic flows subscribing to the L4S service by leveraging scalable congestion control, e.g. according to TCP Prague. The L4S service is characterized by a service bandwidth, e.g. a minimum bandwidth, and a service latency, e.g. a maximum latency. As such, the L4S service can enable support for latency-critical applications such as, for example, remote control, industry 4.0 applications, extended reality, and cloud gaming.

An operator typically provisions one or more service parameters or traffic descriptor parameters for a transmission queue that ensures the quality of service by imposing constraints on the assigned bandwidth and the latency by the DBA engine. It is a problem to satisfy the service latency and service bandwidth of a L4S service by a typical DBA engine, as the associated L4S transmission queue requires a particular behaviour of the upstream PON link that is not satisfied by typical PON and DBA engine configurations and operation.

To this end, an additional service parameter or traffic descriptor parameter, i.e. the L4S traffic descriptor parameter, is provisioned within the DBA engine. This allows identifying one or more transmission queues within one or more ONUs as L4S transmission queues. This allows the DBA engine to apply a specific allocation strategy or mechanism to the L4S transmission queue that satisfies the expected behaviour of the PON link to support the L4S traffic flow. In other words, the L4S traffic descriptor parameter informs the DBA engine that a certain transmission queue is a L4S transmission queue, which allows modifying the DBA operation applied to the L4S transmission queue. It is an advantage that the additional L4S traffic descriptor parameter can easily be incorporated in existing DBA engines.

The DBA engine is further configured to perform, if the L4S transmission queue has a queue occupancy larger than a first threshold, allocating recurrent transmission opportunities to the L4S transmission queue that have a first assigned bandwidth for transmitting L4S packets from the L4S transmission queue to the OLT at an interval corresponding to at most the service latency; and wherein the first assigned bandwidth is at least equal to the service bandwidth.

The queue occupancy may, for example, be a queue fill, a queue size, a queue length, a queue backlog, or an amount of L4S packets within the L4S transmission queue. As the first assigned bandwidth is at least equal to the service bandwidth, the first assigned bandwidth guarantees that the bandwidth allocated to the L4S transmission queue meets the service bandwidth of the L4S service associated with the L4S transmission queue. This has the advantage that sufficient bandwidth is assigned to the L4S transmission queue to support end-to-end congestion control protocols of the L4S service. The interval of the recurrent transmission opportunities refers to the time interval between the start of consecutive transmission opportunities. As the DBA engine allocates recurrent transmission opportunities to the L4S transmission queue with an interval that is at most equal to the service latency, the latency of the L4S traffic flow can meet the service latency of the L4S service associated with the L4S transmission queue. It is a further advantage that the allocating of recurrent transmission opportunities for transmitting L4S packets can easily be incorporated in existing DBA engines.

According to an example embodiment, the DBA engine may further be configured to perform, if the L4S transmission queue has a queue occupancy lower than a second threshold, allocating recurrent transmission opportunities to the L4S transmission queue that have a second assigned bandwidth for reporting the queue occupancy of the L4S transmission queue to the OLT.

In other words, recurrent transmission opportunities are allocated to the L4S transmission queue that allow reporting the queue occupancy of the L4S transmission queue to the OLT. This allows monitoring the queue occupancy of the L4S transmission queue by the DBA engine when the L4S transmission queue is not transmitting L4S packets to the OLT, e.g. when the L4S transmission queue is substantially free of L4S packets. This further allows detecting, by the DBA engine, when the queue occupancy exceeds the first threshold and, thus, when recurrent transmission opportunities are to be allocated to the L4S transmission queue for transmitting L4S packets.

The interval between the start of consecutive recurrent transmission opportunities for reporting the queue occupancy may be relatively small, e.g. approximately equal to the L4S service latency. This allows fast detection of L4S packets within the L4S transmission queue by the DBA engine. The second assigned bandwidth may be substantially smaller than the first assigned bandwidth, as the required bandwidth for reporting the queue occupancy is limited. This allows de-allocating a portion of the first assigned bandwidth if the queue occupancy of the L4S transmission queue is lower than the second threshold, i.e. when the first assigned bandwidth is not required for transmitting L4S packets. This has the advantage that the bandwidth efficiency of the PON is improved, as the de-allocated bandwidth can be assigned to other transmission queues within the PON. It has the further advantage that the energy efficiency of the PON can be improved. It is a further advantage that the allocating of recurrent transmission opportunities for reporting the queue occupancy of a L4S transmission queue can easily be incorporated in existing DBA engines.

According to an example embodiment, the queue occupancy may be reported by means of an upstream dynamic bandwidth report, DBRu, structure, or by means of idle data.

The data transmitted from the L4S transmission queue to an OLT during a recurrent transmission opportunity may include a header, a payload, and/or idle data. The queue occupancy of the L4S transmission queue may be reported to the OLT, and thus the DBA engine, by including the queue occupancy within the transmitted data. The queue occupancy can be included in a DBRu structure, i.e. a standardized frame for buffer status reporting in passive optical networks according to the ITU-T G.9807 standard. Alternatively, the queue occupancy may be determined by the DBA engine or OLT based on the activity of the L4S transmission queue as reflected in the idle data, i.e. based on how previously allocated recurrent transmission opportunities are used. For example, idle XGEM frames within an upstream recurrent transmission opportunity can be used to determine the queue occupancy of the L4S transmission queue.

According to an example embodiment, the L4S transmission queue may further transmit other packets.

In other words, the L4S transmission queue may comprise other packets in addition to L4S packets. Other packets may be any non-L4S packets such as, for example, packets of a best-effort service sent according to a protocol that supports classic congestion control. The L4S traffic descriptor parameter may further indicate if a L4S transmission queue is only associated to L4S services or to both L4S services and best-effort services. The ONU comprising the L4S transmission queue and/or the OLT may further be configured to identify packets as L4S packets and other packets. This allows prioritizing the L4S packets over the other packets.

According to an example embodiment, the first assigned bandwidth may be equal to the service bandwidth increased with a surplus bandwidth to support L4S traffic.

The surplus bandwidth allows ensuring that sufficient bandwidth or data rate is available for the L4S service. The surplus bandwidth further allows achieving the intended operation of the scalable congestion control associated with the L4S traffic flow. In other words, the surplus bandwidth ensures that the scalable congestion control is not hindered by the bandwidth assignment of the DBA engine. The surplus bandwidth may be a fixed value or may be updated adaptively.

According to an example embodiment, the OLT may further comprise means configured to perform estimating the surplus bandwidth based on one or more services associated with the L4S transmission queue, and updating the surplus bandwidth.

According to an example embodiment, the first assigned bandwidth may be configured within the DBA engine by an assured information rate.

This allows the assured bandwidth allocated to the L4S transmission queue to be re-allocated to one or more other transmission queues if the L4S transmission queue has a queue occupancy lower than a threshold, e.g. the second threshold. This has the advantage that it improves the scalability of the disclosed bandwidth allocation mechanism, and that it can avoid congestion within the PON as the sum of the assured bandwidth or assured information rate of all transmission queues is guaranteed to be smaller or equal to the PON bandwidth.

According to an example embodiment, the DBA engine is further configured to perform increasing the assigned bandwidth of the recurrent transmission opportunities from the second assigned bandwidth to the first assigned bandwidth upon receiving a reported queue occupancy that exceeds the first threshold.

Recurrent transmission opportunities may be allocated to the L4S transmission queue if the queue occupancy is lower than the second threshold. These recurrent transmission opportunities are used to report the queue occupancy to the OLT. Thus, upon receiving a queue occupancy that exceeds the first threshold, the DBA engine may increase the assigned bandwidth to allow transmission of L4S packets. In other words, the assigned bandwidth of the recurrent transmission opportunity following a transmission opportunity that included the queue occupancy exceeding the first threshold may be increased. This can be achieved by bypassing the typical DBA cycle time of the DBA engine for assigning recurrent transmission opportunities to non-L4S transmission queues. This has the advantage that the latency to activate the bandwidth assignment for transmitting L4S packets is limited.

According to an example embodiment, the DBA engine may further be configured to perform decreasing the assigned bandwidth of the recurrent transmission opportunities from the first assigned bandwidth to the second assigned bandwidth upon receiving a reported queue occupancy that is lower than the second threshold; and wherein the reported queue occupancy is included within the recurrent transmission opportunities for transmitting packets from the L4S transmission queue to the OLT.

In other words, the queue occupancy of the L4S transmission queue may be reported to the OLT within the recurrent transmission opportunities for transmitting L4S packets. This allows monitoring the queue occupancy of the L4S transmission queue by the DBA engine even when L4S packets are being transmitted. After receiving a queue occupancy lower than the second threshold, indicative of a L4S transmission queue that is substantially free of L4S packets, the assigned bandwidth can be reduced to the second assigned bandwidth for monitoring the queue occupancy.

According to an example embodiment, the DBA engine may further be configured to perform postponing the decreasing after receiving a queue occupancy that is lower than the second threshold; and wherein the postponing is based on the queue occupancies included within one or more subsequent recurrent transmission opportunities.

According to a second example aspect, a method is disclosed comprising, by a dynamic bandwidth allocation, DBA, engine, identifying a L4S transmission queue for transmitting L4S packets with at most a service latency and at least a service bandwidth based on a traffic descriptor parameter provisioned within the DBA engine; wherein the DBA engine is included in an optical line terminal, OLT, configured to communicate in a passive optical network with optical network units, ONUs, that respectively comprise one or more transmission queues; and wherein the DBA engine is configured to allocate recurrent transmission opportunities to the respective transmission queues for transmitting packets from the respective transmission queues to the OLT; and wherein at least one ONU comprises a L4S transmission queue.

According to a third example aspect, a computer-implemented method is disclosed comprising, by a dynamic bandwidth allocation, DBA, engine, identifying a L4S transmission queue for transmitting L4S packets with at most a service latency and at least a service bandwidth based on a traffic descriptor parameter provisioned within the DBA engine; wherein the DBA engine is included in an optical line terminal, OLT configured to communicate in a passive optical network with optical network units, ONUs, that respectively comprise one or more transmission queues; and wherein the DBA engine is configured to allocate recurrent transmission opportunities to the respective transmission queues for transmitting packets from the respective transmission queues to the OLT; and wherein at least one ONU comprises a L4S transmission queue.

According to a fourth example aspect, a data processing system is disclosed configured to perform the computer-implemented method according to the third example aspect.

According to a fifth example aspect, a computer program product is disclosed comprising computer-executable instructions which, when the program is executed by a computer, cause the computer to perform the computer-implemented method according to the third example aspect.

### Brief Description of the Drawings

Fig. 1 shows a schematic block diagram of an example end-to-end network comprising one or more senders, a passive optical network, and a receiver;
Fig. 2 shows an example of the operation of a dynamic bandwidth allocation, DBA, engine according to embodiments to enable L4S traffic between a L4S transmission queue and an optical line terminal within a passive optical network;
Fig. 3 shows steps performed by a DBA engine for allocating recurrent transmission opportunities to one or more L4S transmission queues within a passive optical network;
Fig. 4 shows an example embodiment of a DBA engine within an optical line terminal, wherein the DBA engine is configured to allocate recurrent transmission opportunities to a L4S transmission queue for processing only L4S packets;
Fig. 5 shows an example embodiment of a DBA engine within an optical line terminal, wherein the DBA engine is configured to allocate recurrent transmission opportunities to a L4S transmission queue for processing both L4S packets and non-L4S packets; and
Fig. 6 shows a suitable computing system enabling to implement embodiments of the disclosure.

### Detailed Description of Embodiment(s)

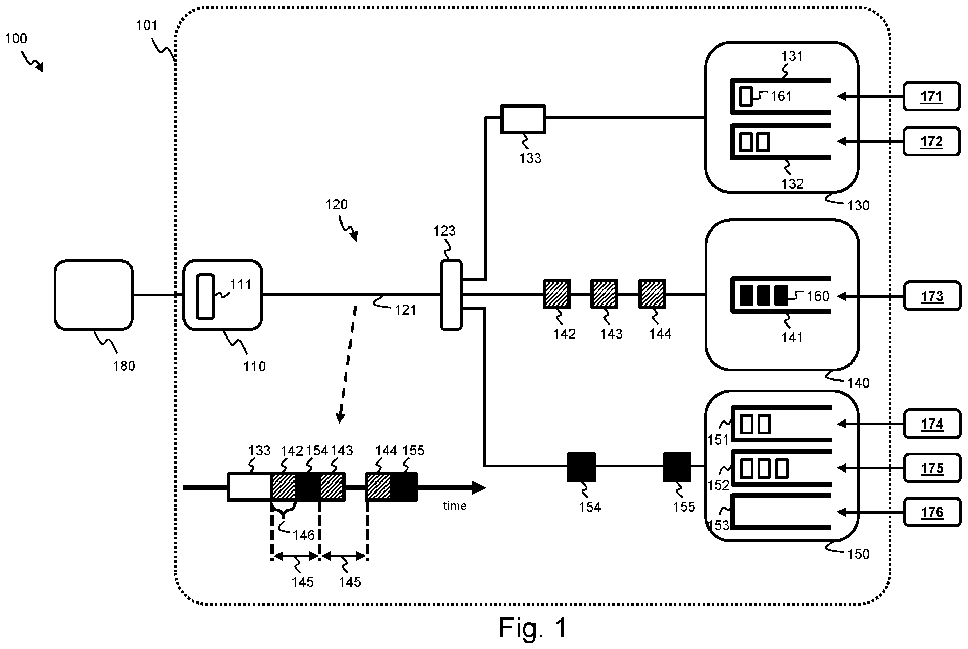

Fig. 1 shows a schematic block diagram of an example end-to-end network 100 comprising one or more senders 171 - 176, a passive optical network 101, PON, and a receiver 180. The receiver 180 may, for example, be a network server. The one or more senders 171 - 176 may be connected services or applications that are executed on a client device such as, for example, a smartphone, a laptop, or a tablet. The senders 171 - 176 may send data packets 161, 160 to the receiver 180 over the network 100. A collection of data packets 160, 161 travelling from a sender 171 - 176 to a receiver 180 in an end-to-end network 100 can be referred to as a traffic flow. The data packets 160, 161 can comprise any information such as, for example, emails, voice calls, instructions, or streaming video. It will be apparent that the senders 171 - 176 may be connected to the PON 101 by means of one or more intermediate network components (not shown in Fig. 1), e.g. a gateway; and that the PON 101 may be connected to network server 180 by means of one or more intermediate network components (not shown in Fig. 1), e.g. a broadband network gateway.

Packets 160, 161 travel over PON 101 for a leg of their journey between the respective senders 171 - 176 and the receiver 180. The PON 101 includes at least one optical line terminal, OLT, 110 and a plurality of optical network units, ONUs, 130, 140, 150. In this example, the OLT 110 is connected to three ONUs 130, 140, 150, however, the OLT 110 may be connected to fewer or more ONUs. The ONUs 130, 140, 150 are connected to the OLT 110 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110.

The passive optical network 101 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 101 may implement time-division multiplexing, TDM, or time- and wavelength-division multiplexing, TWDM.

The respective ONUs 130, 140, 150 comprise one or more transmission queues 131, 132, 141, 151, 152, 153 where data packets 160, 161 originating from the connected services 171 - 176 or applications, i.e. the senders, await their turn to be transmitted to the OLT 110. The one or more transmission queues 131, 132, 141, 151, 152, 153 within the respective ONUs 130, 140, 150 may be transmission containers, also referred to as T-CONT. Transmission containers are ONU-objects that represent a group of logical connections within an ONU 130, 140, 150 that appear as a single entity for the purpose of upstream bandwidth assignment in a passive optical network 101.

Time-division multiplexing, TDM, may be implemented to share the telecommunication medium, i.e. the optical feeder fibre 121, in time between the ONUs 130, 140, 150 in the upstream. To this end, recurrent transmission opportunities 133, 142, 143, 144, 154, 155 are allocated to the respective ONUs 130, 140, 150 during which the respective ONUs 130, 140, 150 are allowed to transmit data to the OLT 110. For example, ONU 140 is allowed to transmit upstream data during the recurrent transmission opportunities 142, 143, 144. The recurrent transmission opportunities 133, 142, 143, 144, 154, 155 may also be referred to as timeslots or bursts.

The recurrent transmission opportunities 133, 142, 143, 144, 154, 155 are allocated by dynamic bandwidth allocation, DBA, sometimes also referred to as dynamic bandwidth assignment. To this end, the OLT 110 comprises a DBA engine 111 that dynamically allocates transmission opportunities to transmission queues. The transmission opportunities 133, 142, 143, 144, 154, 155 can be characterized by a configurable length 146 and a configurable interval 145 between the start of consecutive transmission opportunities. The DBA engine 111 is configured to allocate recurrent transmission opportunities 133, 142, 143, 144, 154, 155 to the transmission queues 131, 132, 141, 151, 152, 153 based on the activity within the transmission queues and one or more traffic descriptor parameters, also referred to as service parameters. These traffic descriptor parameters impose constraints on the bandwidth and the latency that is assigned to respective transmission queues by the DBA engine 111 such that the quality of service for the respective traffic flows can be assured. For example, standard ITU-T G.9807 defines bandwidth-related traffic descriptor parameters 'committed information rate, CIR', 'assured information rate, AIR', and 'excessive information rate, EIR'; and a latency-related traffic descriptor parameter 'delay jitter tolerance, DT'. Traffic descriptor parameters are typically provisioned within the DBA engine 111 by an operator for the respective transmission queues.

The configurable interval 145 of the transmission opportunities, the configurable length 146 of the transmission opportunities, and the assigned bandwidth or data rate define the latency and bandwidth of a traffic flow of a transmission queue between an ONU 130, 140, 150 and the OLT 110. As such, the configuration and the operation of the DBA engine 111 can have a substantial impact on the latency and bandwidth of the end-to-end traffic flow between the senders 171 - 176 and the receiver 180.

Low latency, low loss, and scalable throughput, also referred to as L4S, is a service that enables internet applications, i.e. senders, to transmit L4S packets to a receiver over a network with low queuing latency, low congestion loss, and scalable throughput control. Scalable congestion control is implemented at the sender of the L4S packets in combination with a marking protocol to enable a low latency and high throughput traffic flow for a dedicated L4S service or application.

Scalable congestion control algorithms apply a reduction of the packet transmission rate proportionally to the amount of reflected marked packets. In scalable congestion control, the average time from one congestion signal to the next, i.e. the recovery time, remains invariant as the flow rate scales. As scalable congestion control allows senders to closely track the link capacity of the network communication node and reduce the queuing delay, low latency communication with limited jitter can be achieved. Scalable congestion control can include, amongst others, BBRv2, TCP Prague, and SCReaM.

In doing so, a L4S service can offer a minimal and stable latency across an end-to-end link. An end-user may subscribe to such a L4S service for latency-critical applications such as, for example, remote control, industry 4.0 applications, extended reality, low latency web browsing and cloud gaming. A L4S service is characterized by a service bandwidth, e.g. a minimum bandwidth, and a service latency, e.g. a maximum latency. The service bandwidth and service latency may also be referred to as service level agreement bandwidth and service level agreement latency, respectively.

It is a problem to continuously satisfy the service latency and the service bandwidth of a L4S service by a typical DBA engine, as the associated L4S traffic flow requires a particular behaviour of the upstream PON link that is not satisfied by the configuration and operation of a typical PON and DBA engine. For example, the bandwidth assigned to a transmission queue 131, 132, 141, 151, 152, 153 within a PON 101 can fluctuate depending on the configuration and the traffic within other transmission queues, which is undesirable for L4S traffic flows. Additionally, the speed of bandwidth changes is limited which can prevent proper functioning of the L4S scalable congestion control by providing insufficient bandwidth at times, or by preventing proper marking of L4S packets. A typical DBA engine 111 may further fail to prioritize L4S traffic over non-L4S traffic. Additionally, the operation of the DBA engine 111 is configured by the provisioned traffic descriptor parameters which may not be aligned with the requirements of a L4S service. It can thus be desirable to enable upstream transmission of L4S traffic within a passive optical network.

According to example embodiments of the present disclosure, this object is achieved by an optical line terminal 110 comprising a DBA engine 111 configured to identify a L4S transmission queue 141 within at least one ONU 140 of a passive optical network 101, based on a L4S traffic descriptor parameter provisioned within the DBA engine. In other words, a dedicated traffic descriptor parameter can be configured or provisioned within the DBA engine for discriminating L4S transmission queues 141 from non-L4S transmission queues 131, 132, 151, 152, 153 in addition to the typical traffic descriptor parameters, e.g. as defined in the ITU-T G.9807 standard.

The L4S transmission queue 141 is a transmission queue that is associated with a L4S service 173. The L4S transmission queue 141 receives L4S packets 160 from the associated L4S service 173. The L4S packets 160 within the L4S transmission queue 141 await their turn to be transmitted to the OLT 110 during the allocated recurrent transmission opportunity 142, 143, 144 associated with the L4S transmission queue 141.

Provisioning the L4S traffic descriptor parameter within the DBA engine 111 thus allows identifying transmission queue 141 as a L4S transmission queue. This allows the DBA engine 111 to apply a specific allocation strategy or mechanism to the L4S transmission queue 141 that satisfies the expected behaviour of the PON link to support the L4S traffic flow. In other words, the L4S traffic descriptor parameter informs the DBA engine 111 that a certain transmission queue is a L4S transmission queue 141, which allows modifying the DBA operation applied to the L4S transmission queue compared to the DBA operation applied to non-L4S transmission queues 131, 132, 151, 152, 153.

The L4S traffic descriptor may be a single bit that is, for example, assigned value 0 to indicate a standard non-L4S transmission queue, and that is assigned value 1 to indicate a L4S transmission queue. Alternatively, the L4S traffic descriptor may include two or more bits to differentiate more classes or types of transmission queues, e.g. a bandwidth critical L4S transmission queue, a bandwidth non-critical L4S transmission queue, a start-up critical L4S transmission queue, and a non-start-up critical L4S transmission queue.

It will further be apparent that a PON 101 may comprise a plurality of ONUs that include a L4S transmission queue 141, and that the L4S traffic descriptor parameter allows identifying the respective L4S transmission queues within the PON 101.

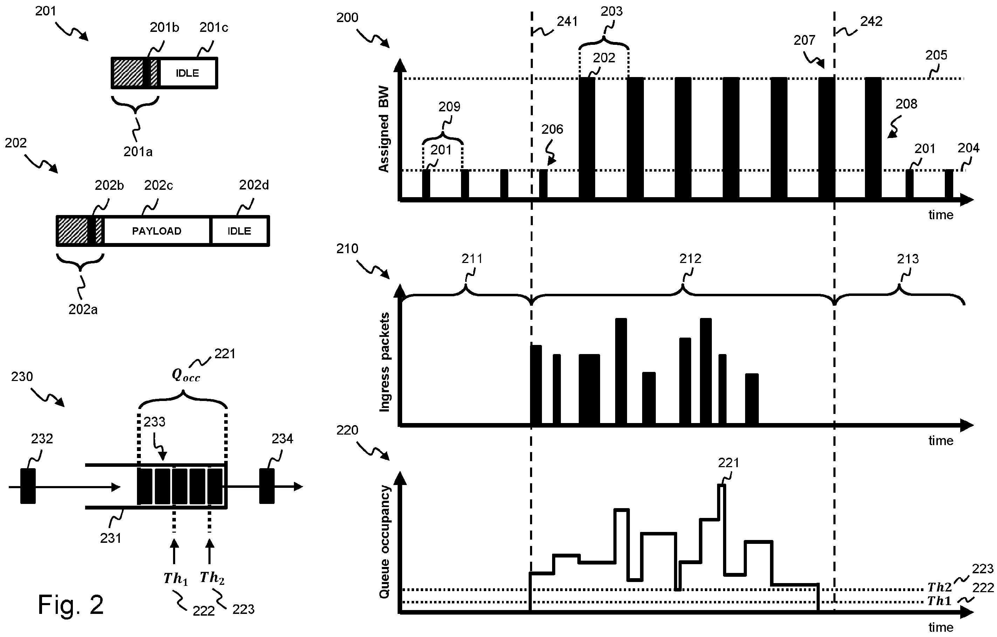

Fig. 2 shows an example of the operation of a DBA engine according to embodiments to enable L4S traffic between a L4S transmission queue 231 and an OLT within a passive optical network. Fig. 2 shows an example 230 of a L4S transmission queue 231 that receives, buffers, and transmits L4S packets 232, 233, 234 in a passive optical network. Fig. 2 further shows the bandwidth 200 assigned to recurrent transmission opportunities 201, 202 for the L4S transmission queue 231 in time; the ingress 210 of L4S packets 232 at the L4S transmission queue 231 in time; and the queue occupancy 220 of the L4S transmission queue 231 in time. The queue occupancy may, for example, be a queue fill, a queue size, a queue length, a queue backlog, or an amount of L4S packets 233 within the L4S transmission queue 231.

During period 211, the L4S transmission queue 231 may be substantially free of L4S packets 233, i.e. the queue occupancy 220 may be substantially equal to zero. At timestep 241, the L4S transmission queue 231 receives one or more L4S packets 232 which increases the queue occupancy 221 above a first threshold 222. The DBA engine may be configured to allocate recurrent transmission opportunities 202 that have a first assigned bandwidth 205 for transmitting L4S packets 234 from the L4S transmission queue 231 to an OLT when the queue occupancy 221 exceeds this first threshold 222. The first assigned bandwidth 205 may be at least equal to the service bandwidth of the L4S service associated with the L4S transmission queue 231. This guarantees that the bandwidth of the L4S traffic flow meets the service bandwidth of the L4S service. This has the advantage that sufficient bandwidth is assigned to the L4S transmission queue to support end-to-end congestion control protocols of the L4S service.

The interval 203 between the start of consecutive recurrent transmission opportunities 202 may further correspond to at most the service latency of the associated L4S service. This can be achieved by aligning the delay tolerance, DT, traffic descriptor parameter associated with the L4S transmission queue with the L4S service latency. In doing so, the latency of the L4S traffic flow can meet the service latency offered by the L4S service.

During period 212, L4S packets 232 are enqueued in the L4S transmission queue 231 upon reception by an ONU, and L4S packets 234 are dequeued from the L4S transmission queue 231 for transmission to an OLT during the recurrent transmission opportunities 202. The data transmitted from the L4S transmission queue 231 to an OLT during a transmission opportunity 202 may comprise a header 202a, a payload 202c, and idle data 202d. The payload 202c may comprise one or more L4S packets 234. Idle data 201c, 202d may refer to data which carries no information.

The queue occupancy 221 of the L4S transmission queue 231 may be reported to the OLT within the transmitted data during the recurrent transmission opportunities 202. This can be achieved by including the queue occupancy 221 within an upstream dynamic bandwidth report, DBRu, structure 202b. Such a DBRu structure 202b may be included within the header 202a of the transmitted data during a recurrent transmission opportunity 202. The DBRu structure 202b is a standardized frame for buffer status reporting in a passive optical network according to the ITU-T G.9807 standard. Alternatively, the queue occupancy 221 may be included in a dedicated frame, field, or bit of the header 202a.

Alternatively, the queue occupancy 221 may be determined by the DBA engine or OLT based on the activity of the L4S transmission queue 231 as reflected by the idle data 202d within the recurrent transmission opportunities 202, i.e. based on how previously allocated recurrent transmission opportunities are used. For example, idle XGEM frames within a recurrent transmission opportunity 202 can be used to determine the queue occupancy 221 of the L4S transmission queue 231.

At timestep 242, the queue occupancy 221 drops below a second threshold 223 due to the transmission of L4S packets 234 during transmission opportunity 207. The DBA engine may be configured to allocate recurrent transmission opportunities 201 that have a second assigned bandwidth 204 for reporting the queue occupancy of the L4S transmission queue to the OLT if the queue occupancy 221 is lower than the second threshold 223. This allows monitoring the queue occupancy 221 of the L4S transmission queue 231 by the DBA engine when the L4S transmission queue is not transmitting L4S packets to the OLT, e.g. when the L4S transmission queue is substantially free of L4S packets 233 during period 211 and period 213.

The interval 209 between the start of consecutive recurrent transmission opportunities 201 for reporting the queue occupancy may be relatively small, e.g. approximately equal to the L4S service latency. This allows fast detection of L4S packets 233 within the L4S transmission queue 231 by the DBA engine.

The second assigned bandwidth 204 may be substantially smaller than the first assigned bandwidth 205, as the required bandwidth for reporting the queue occupancy 221 is limited. This allows de-allocating a portion of the first assigned bandwidth 205 if the queue occupancy 221 of the L4S transmission queue 231 is lower than the second threshold 223, i.e. when the relatively large first assigned bandwidth is not required for transmitting L4S packets 234. This has the advantage that it improves the bandwidth efficiency of the PON, as the de-allocated bandwidth can be assigned to other transmission queues within the PON. This has the further advantage that the energy efficiency of the PON can be improved.

The queue occupancy 221 of the L4S transmission queue 231 may be reported to the OLT within header 201a and/or idle data 201c transmitted during the recurrent transmission opportunities 201. This can be achieved by including the queue occupancy 221 within a DBRu structure 201b transmitted in the header 201a during a transmission opportunity 201. Alternatively, the queue occupancy 221 may be determined by the DBA engine or OLT based on idle data 201c transmitted during recurrent transmission opportunities 201.

It will be apparent that the second threshold 223 can be smaller than the first threshold 222, equal to the first threshold 222, or larger than the first threshold 222. It will further be apparent that at least one transmission opportunity 208 at the first assigned bandwidth 205 may still be allocated after the queue occupancy 221 has dropped below the second threshold 223 due to the transmission of L4S packets 234 during transmission opportunity 207. Transmission opportunity 208 may report the queue occupancy 221 lower than the second threshold to the DBA engine.

The bandwidth 205 assigned to the L4S transmission queue 231 may be configured within the DBA engine by an assured information rate, AIR, traffic descriptor parameter according to the ITU-T G.9807 standard. An AIR traffic descriptor parameter defines an assured bandwidth for a transmission queue that is guaranteed to be available when the bandwidth is demanded or needed by the transmission queue. In other words, the assured bandwidth for a transmission queue can be assigned to other transmission queues when the transmission queue does not need the bandwidth. This allows the bandwidth allocated to the L4S transmission queue 231 to be re-allocated to one or more other transmission queues if the L4S transmission queue has a queue occupancy 221 lower than a threshold, e.g. the second threshold 223. This has the advantage that it improves the scalability of the disclosed bandwidth allocation mechanism. It has the further advantage that congestion within the PON can be avoided, as the sum of the assured bandwidth of all transmission queues is guaranteed to be smaller or equal to the PON bandwidth.

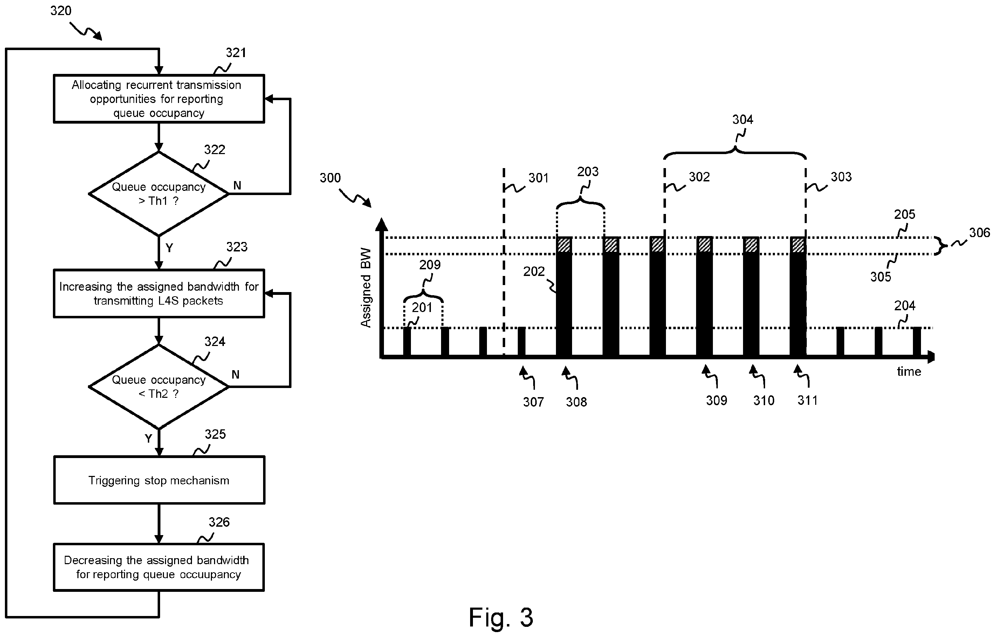

Fig. 3 shows steps 320 performed by a DBA engine for allocating recurrent transmission opportunities 201, 202 to one or more L4S transmission queues within a passive optical network, according to example embodiments. In a first step 321, the DBA engine may allocate recurrent transmission opportunities 201 to the L4S transmission queue for reporting the queue occupancy when the queue occupancy of the L4S transmission queue is lower than a threshold, i.e. the second threshold. The bandwidth assigned to the L4S transmission queue for reporting the queue occupancy may be the second bandwidth 204.

In doing so, the DBA engine receives an update on the occupancy of the L4S transmission queue with each transmission opportunity 201. While the queue occupancy remains below the first threshold, the DBA engine keeps allocating recurrent transmission opportunities 201 for reporting the queue occupancy. When the queue occupancy exceeds the first threshold in step 322, i.e. when the L4S transmission queue has received a certain amount of L4S packets, the DBA engine increases the assigned bandwidth 204 for reporting the queue occupancy to a bandwidth 205 for transmitting the L4S packets to the OLT in step 323.

The increasing of the assigned bandwidth 204, 205 may be performed upon receiving the queue occupancy that exceeds the first threshold. In other words, the assigned bandwidth of the transmission opportunity following the transmission opportunity that reported the exceeding queue occupancy may be increased. For example, the queue occupancy may exceed the first threshold at timestep 301. The next transmission opportunity 307 reports this exceeding queue occupancy to the OLT, allowing the DBA engine to increase the assigned bandwidth 205 for transmission opportunity 308. This can, for example, be achieved by bypassing the DBA cycle time of the typical DBA engine operation for allocating transmission opportunities for non-L4S traffic.

The assigned bandwidth 205 may be equal to the service bandwidth of the L4S service 305 increased with a surplus bandwidth 306 to support L4S traffic. The surplus bandwidth 306 allows ensuring that sufficient bandwidth or data rate is available for the L4S service. The surplus bandwidth 306 further allows achieving the intended operation of the scalable congestion control associated with the L4S traffic flow. In other words, the scalable congestion control is not hindered by the bandwidth assignment of the DBA engine. The bandwidth 205 assigned to the L4S transmission queue 231 may, for example, be configured within the DBA engine by an assured information rate, AIR, traffic descriptor that equals the L4S service bandwidth increased with the surplus bandwidth 306.

The surplus bandwidth 306 may be a fixed value or may be updated adaptively. Alternatively, the OLT may further comprise means configured to estimate the value of the surplus bandwidth 306 based on the L4S service associated with the L4S transmission queue. The means may further be configured to update the surplus bandwidth 306 based on the estimation.

As discussed in relation to Fig. 2 above, the queue occupancy can also be included or reported within the recurrent transmission opportunities 202 for transmitting packets from the L4S transmission queue to the OLT. This allows checking whether the queue occupancy has dropped below the second threshold in step 324. While this is not the case, the DBA engine keeps allocating recurrent transmission opportunities 202 for transmitting L4S packets to the OLT. When the queue occupancy drops below the second threshold in step 324, a stop mechanism may be triggered in step 325.

The stop mechanism may postpone the decreasing of the assigned bandwidth from the bandwidth 205 for transmitting L4S packets to the bandwidth 204 for reporting the queue occupancy after receiving a queue occupancy that is lower than the second threshold. This can, for example, be achieved by initiating a timer or counter in step 325 that resets each time a non-empty L4S transmission queue occupancy is reported. Upon expiry of the timer, the bandwidth assigned to the L4S transmission queue may be decreased in step 326.

For example, at timestep 302 the queue occupancy may drop below the second threshold due to transmission of L4S packets during the preceding transmission opportunity. The reporting of this queue occupancy in transmission opportunity 309 may thus trigger the stop mechanism, i.e. the timer or counter. If the subsequent transmission opportunities 310, 311 do not include a non-zero queue occupancy, the timer or counter expires after period 304 at timestep 303. If subsequent transmission opportunity 310 includes a non-zero queue occupancy, the timer or counter may be reset. In this example (not shown in Fig. 3) the timer or counter expires one transmission opportunity after transmission opportunity 311. Thus, the postponing of the decreasing of the assigned bandwidth 205 is based on the queue occupancies included within one or more subsequent recurrent transmission opportunities 310, 311.

Alternatively, the stop mechanism in step 325 may be omitted and the decreasing is performed upon receiving a queue occupancy that is lower than the second threshold. In other words, the bandwidth assigned to the transmission opportunity following the transmission opportunity that reported the exceeding queue occupancy may be decreased.

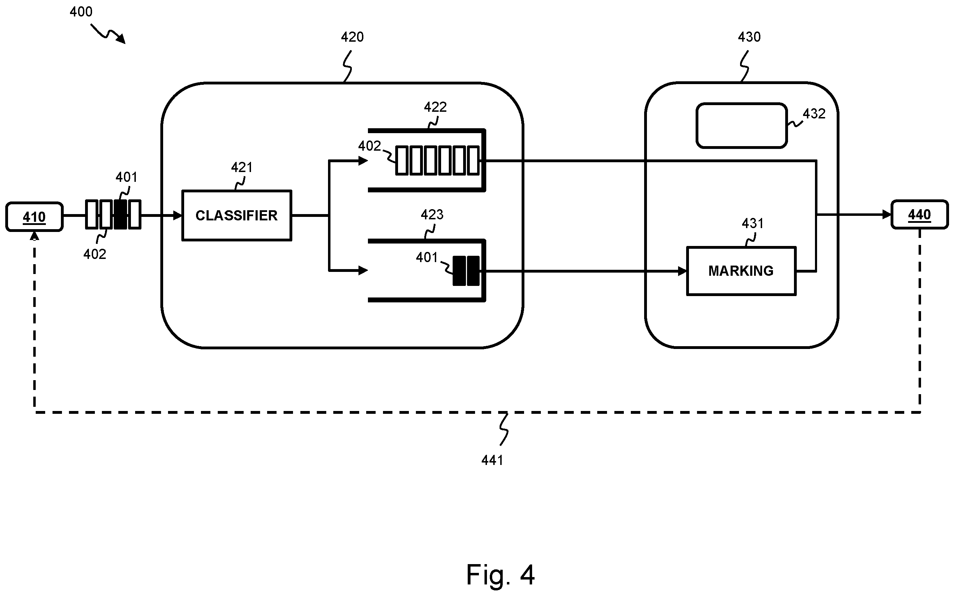

Fig. 4 shows an example embodiment of a DBA engine 432 within an optical line terminal 430 configured to allocate recurrent transmission opportunities to a L4S transmission queue 423 for processing only L4S packets. ONU 420 may receive both L4S packets 401 and non-L4S packets 402 from one or more senders 410. As such, ONU 420 may further comprise a classifier 421 that is configured to identify L4S packets 401 based on an identifier included within the packets, e.g. ECN bits in a header of the packets 401, 402. This allows sending the L4S packets 401 to the L4S transmission queue 423. Transmission queue 423 is identifiable by DBA engine 111 within OLT 430 as a L4S transmission queue based on the L4S traffic descriptor parameter provisioned within the DBA engine 111. Packets identified as non-L4S packets 402 by classifier 421 may be sent to a typical or traditional transmission queue 422. Alternatively, the classifier 421 may be included in a gateway located downstream of ONU 420, i.e. between sender 410 and ONU 420.

The OLT 430 may further comprise means 431 configured to perform the L4S-ECN marking to control the rate of the L4S traffic according to scalable congestion control, i.e. by reflecting 441 the amount of marked packets to the sender. Alternatively, the L4S-ECN marking may be performed in a network component located upstream from the OLT 430, e.g. a broadband network gateway.

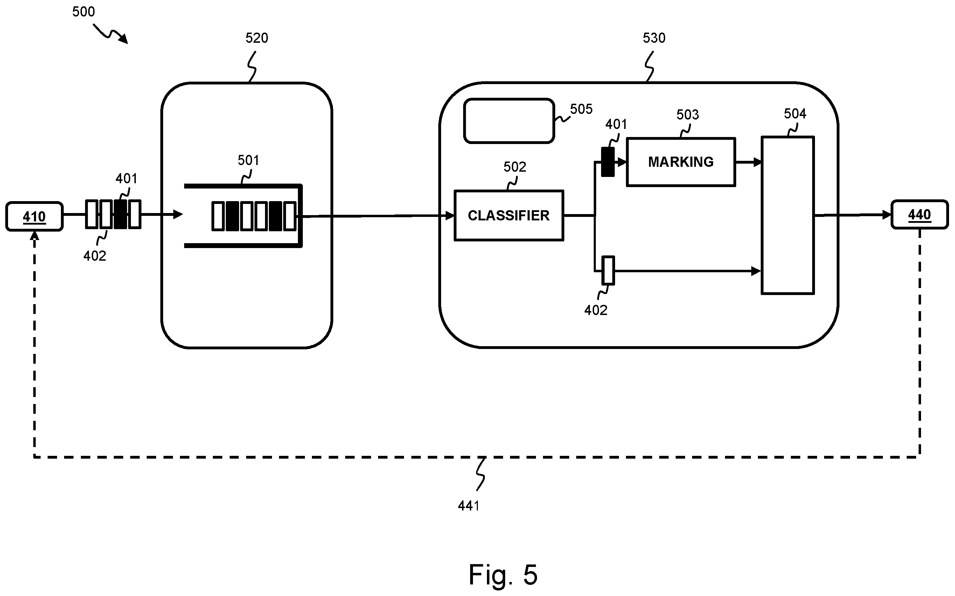

Fig. 5 shows an example embodiment of a DBA engine 505 within an optical line terminal 530 configured to allocate recurrent transmission opportunities to a L4S transmission queue 501 for processing both L4S packets 401 and non-L4S packets 402. Non-L4S packets 402 may, for example, be best effort packets. ONU 520 may receive both L4S packets 401 and non-L4S packets 402 from one or more senders 410. ONU 520 may be configured to prioritize the transmission of L4S packets 401 over the transmission of non-L4S packets 402 within the shared L4S transmission queue 501. This can, for example, be achieved by prioritizing the slotting of L4S packets 401 within the recurrent transmission opportunities allocated to the shared L4S transmission queue 501.

The bandwidth assigned to these recurrent transmission opportunities may equal the service bandwidth of the L4S service that provides the L4S packets 401 increased with a surplus bandwidth, as discussed in relation to Fig. 3. This has the advantage that the surplus bandwidth, i.e. 306 in Fig. 3, can be used for transmitting non-L4S packets 402 in addition to L4S packets 401 within a transmission opportunity. In other words, the payload within the data transmitted from ONU 520 to OLT 530 may include both L4S packets 401 and non-L4S packets 402.

OLT 530 may comprise a classifier 502 configured to identify L4S packets 401 based on an identifier within the packets, e.g. ECN bits in a header of the packets 401, 402. The OLT 530 may further comprise means 503 configured to perform the L4S-ECN marking to control the rate of the L4S traffic according to scalable congestion control, i.e. by reflecting 441 the amount of marked packets to the sender 410. Alternatively, the L4S-ECN marking may be performed in a network component located upstream from the OLT 530, e.g. a broadband network gateway.

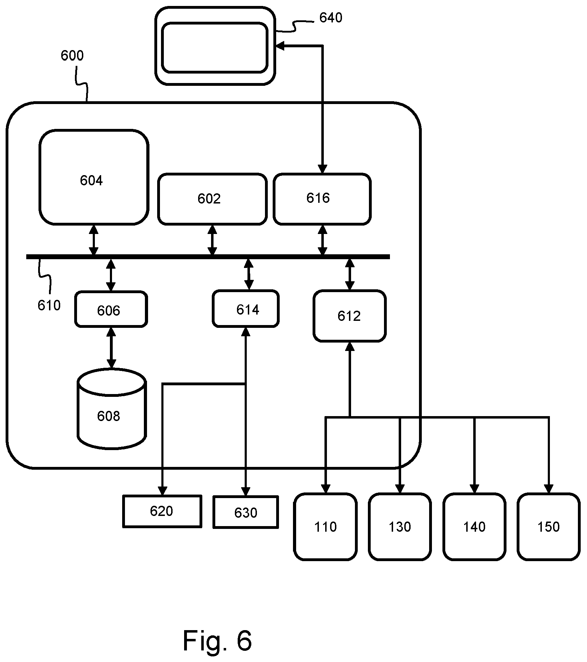

Fig. 6 shows a suitable computing system 600 enabling to implement embodiments of the method for managing L4S traffic in a passive optical network. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with an optical line terminal110, OLT, and one or more optical network units 130, 140, 150, ONUs. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used. Computing system 600 could thus correspond to the DBA engine 111.

Although the present disclosure has been illustrated by reference to specific embodiments, it will be apparent to those skilled in the art that the invention is not limited to the details of the foregoing illustrative embodiments. The invention is limited by the appended claims.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line terminal, OLT (110), configured to communicate in a passive optical network (100) with optical network units, ONUs (130, 140, 150), that respectively comprise one or more transmission queues (131, 132, 141, 151, 152, 153); wherein the OLT comprises a dynamic bandwidth allocation, DBA, engine (111) configured to allocate recurrent transmission opportunities (133, 142, 143, 144, 154, 155) to the respective transmission queues for transmitting packets from the respective transmission queues to the OLT; wherein at least one ONU (140) comprises a L4S transmission queue (141) for transmitting L4S packets with at most a service latency and at least a service bandwidth; and **characterized in that** the DBA engine is further configured to perform:
- identifying a L4S transmission queue based on a L4S traffic descriptor parameter provisioned within the DBA engine; and
- if the L4S transmission queue (231) has a queue occupancy (221) larger than a first threshold (222), allocating recurrent transmission opportunities (202) to the L4S transmission queue that have a first assigned bandwidth (205) for transmitting L4S packets (234) from the L4S transmission queue to the OLT at an interval (203) corresponding to at most the service latency; and wherein the first assigned bandwidth (205) is at least equal to the service bandwidth.

2. The optical line terminal, OLT, according to claim 1, wherein the DBA engine (111) is further configured to perform, if the L4S transmission queue (231) has a queue occupancy (221) lower than a second threshold (223), allocating recurrent transmission opportunities (201) to the L4S transmission queue that have a second assigned bandwidth (204) for reporting the queue occupancy of the L4S transmission queue to the OLT.

3. The optical line terminal, OLT, according to any of the preceding claims, wherein the queue occupancy is reported by means of an upstream dynamic bandwidth report, DBRu, structure (201b, 202b), or by means of idle data (201c, 202d).

4. The optical line terminal, OLT, according to any of the preceding claims, wherein the L4S transmission queue (501) further transmits other packets (402).

5. The optical line terminal, OLT, according to any of the preceding claims, wherein the first assigned bandwidth (205) is equal to the service bandwidth (305) increased with a surplus bandwidth (306) to support L4S traffic.

6. The optical line terminal, OLT, according to claim 5, wherein the OLT further comprises means configured to perform estimating the surplus bandwidth (306) based on one or more services associated with the L4S transmission queue, and updating the surplus bandwidth.

7. The optical line terminal, OLT, according to any of the preceding claims, wherein the first assigned bandwidth (205) is configured within the DBA engine by an assured information rate, AIR.

8. The optical line terminal, OLT, according to claim 2, wherein the DBA engine is further configured to perform increasing (323) the assigned bandwidth of the recurrent transmission opportunities (201, 202) from the second assigned bandwidth (204) to the first assigned bandwidth (205) upon receiving a reported queue occupancy (307) that exceeds the first threshold (222).

9. The optical line terminal, OLT, according to claim 2, wherein the DBA engine is further configured to perform decreasing (326) the assigned bandwidth of the recurrent transmission opportunities (201, 202) from the first assigned bandwidth (205) to the second assigned bandwidth (204) upon receiving a reported queue occupancy that is lower than the second threshold; and wherein the reported queue occupancy is included within the recurrent transmission opportunities (202) for transmitting L4S packets from the L4S transmission queue to the OLT.

10. The optical line terminal, OLT, according to claim 9, wherein the DBA engine is further configured to perform postponing (304) the decreasing after receiving a reported queue occupancy (309) that is lower than the second threshold (222); and wherein the postponing is based on the queue occupancies included within one or more subsequent recurrent transmission opportunities (310, 311).

11. A computer-implemented method comprising:
- identifying an L4S transmission queue for transmitting L4S packets with at most a service latency and at least a service bandwidth based on a traffic descriptor parameter provisioned within a dynamic bandwidth allocation, DBA, engine of an optical line terminal, OLT; **characterized in that**
- if the L4S transmission queue (231) has a queue occupancy (221) larger than a first threshold (222), allocating recurrent transmission opportunities (202) to the L4S transmission queue that have a first assigned bandwidth (205) for transmitting L4S packets (234) from the L4S transmission queue to the OLT at an interval (203) corresponding to at most the service latency; and wherein the first assigned bandwidth (205) is at least equal to the service bandwidth;
wherein the OLT is configured to communicate in a passive optical network with optical network units, ONUs, that respectively comprise one or more transmission queues; and wherein the DBA engine is configured to allocate recurrent transmission opportunities to the respective transmission queues for transmitting packets from the respective transmission queues to the OLT; wherein at least one ONU comprises a L4S transmission queue.

12. A data processing system configured to perform the computer-implemented method according to claim 11.

13. A computer program product comprising computer-executable instructions which, when the program is executed by a computer, cause the computer to perform the computer-implemented method according to claim 11.

## Patentansprüche

1. Optical Line Terminal, OLT (110), das dazu ausgestaltet ist, in einem passiven optischen Netzwerk (100) mit Optical Network Units, ONUs, (130, 140, 150) zu kommunizieren, die jeweils eine oder mehrere Übertragungswarteschlangen (131, 132, 141, 151, 152, 153) umfassen; wobei das OLT eine dynamische Bandbreitenzuweisungs-, DBA, -Engine (111) umfasst, die dazu ausgestaltet ist, wiederkehrende Übertragungsgelegenheiten (133, 142, 143, 144, 154, 155) zu den jeweiligen Übertragungswarteschlangen zum Übertragen von Paketen von den jeweiligen Übertragungswarteschlangen zu dem OLT zuzuweisen; wobei mindestens eine ONU (140) eine L4S-Übertragungswarteschlage (141) zum Übertragen von L4S-Paketen mit höchstens einer Dienstlatenz und mindestens einer Dienstbandbreite umfasst; und
**dadurch gekennzeichnet, dass** die DBA-Engine ferner dazu ausgestaltet ist, durchzuführen:
- Identifizieren einer L4S-Übertragungswarteschlange auf der Grundlage eines L4S-Verkehrsdeskriptorparameters, der innerhalb der DBA-Engine vorgesehen ist; und
- wenn die L4S-Übertragungswarteschlange (231) eine Warteschlangenbelegung (221) aufweist, die größer als ein erster Schwellenwert (222) ist, Zuweisen wiederkehrender Übertragungsgelegenheiten (202) zu der L4S-Übertragungswarteschlange, die eine erste zugewiesene Bandbreite (205) zum Übertragen von L4S-Paketen (234) von der L4S-Übertragungswarteschlange zu dem OLT in einem Intervall (203) aufweisen, das höchstens der Dienstlatenz entspricht; und wobei die erste zugewiesene Bandbreite (205) mindestens gleich der Dienstbandbreite ist.

2. Optical Line Terminal, OLT, nach Anspruch 1, wobei die DBA-Engine (111) ferner dazu ausgestaltet ist, wenn die L4S-Übertragungswarteschlange (231) eine Warteschlangenbelegung (221) aufweist, die niedriger als ein zweiter Schwellenwert (223) ist, wiederkehrende Übertragungsgelegenheiten (201) zu der L4S-Übertragungswarteschlange zuzuweisen, die eine zweite zugewiesene Bandbreite (204) zum Melden der Warteschlangenbelegung der L4S-Übertragungswarteschlange an das OLT aufweisen.

3. Optical Line Terminal, OLT, nach einem der vorhergehenden Ansprüche, wobei die Warteschlangenbelegung mittels einer Dynamic Bandwidth Report upstream, DBRu, Struktur (201b, 202b) oder mittels Leerlaufdaten (201c, 202d) gemeldet wird.

4. Optical Line Terminal, OLT, nach einem der vorhergehenden Ansprüche, wobei die L4S-Übertragungswarteschlange (501) ferner andere Pakete (402) überträgt.

5. Optical Line Terminal, OLT, nach einem der vorhergehenden Ansprüche, wobei die erste zugewiesene Bandbreite (205) gleich der um eine überschüssige Bandbreite (306) zum Unterstützen von L4S-Verkehr erhöhten Dienstbandbreite (305) ist.

6. Optical Line Terminal, OLT, nach Anspruch 5, wobei das OLT ferner Mittel umfasst, die dazu ausgestaltet sind, das Schätzen der überschüssigen Bandbreite (306) auf der Grundlage von einem oder mehreren Diensten, die mit der L4S-Übertragungswarteschlange verknüpft sind, und das Aktualisieren der überschüssigen Bandbreite durchzuführen.

7. Optical Line Terminal, OLT, nach einem der vorhergehenden Ansprüche, wobei die erste zugewiesene Bandbreite (205) mit der DBA-Engine mittels einer Assured Information Rate, AIR, konfiguriert ist.

8. Optical Line Terminal, OLT, nach Anspruch 2, wobei die DBA-Engine ferner dazu ausgestaltet ist, beim Empfangen einer gemeldeten Bandbreitenbelegung (307), die den ersten Schwellenwert (222) überschreitet, das Erhöhen (323) der zugewiesenen Bandbreite der wiederkehrenden Übertragungsgelegenheiten (201, 202) von der zweiten zugewiesenen Bandbreite (204) auf die erste zugewiesene Bandbreite (205) durchzuführen.

9. Optical Line Terminal, OLT, nach Anspruch 2, wobei die DBA-Engine ferner dazu ausgestaltet ist, beim Empfangen einer gemeldeten Warteschlangenbelegung, die niedriger als der zweite Schwellenwert ist, das Vermindern (326) der zugewiesenen Bandbreite der wiederkehrenden Übertragungsgelegenheiten (201, 202) von der ersten zugewiesenen Bandbreite (205) auf die zweite zugewiesene Bandbreite (204) durchzuführen; und wobei die gemeldete Warteschlangenbelegung innerhalb der wiederkehrenden Übertragungsgelegenheiten (202) zum Übertragen von L4S-Paketen von der L4S-Übertragungswarteschlange zu dem OLT enthalten ist.

10. Optical Line Terminal, OLT, nach Anspruch 9, wobei die DBA-Engine ferner dazu ausgestaltet ist, das Zurückstellen (304) des Verminderns nach dem Empfangen einer gemeldeten Warteschlangenbelegung (309), die niedriger als der zweiten Schwellenwert (222) ist, durchzuführen; und wobei das Zurückstellen auf den Warteschlangenbelegungen gründet, die innerhalb einer oder mehrerer anschließender wiederkehrender Übertragungsgelegenheiten (310, 311) enthalten sind.

11. Computerimplementiertes Verfahren, umfassend:
- Identifizieren einer L4S-Übertragungswarteschlange zum Übertragen von L4S-Paketen mit höchstens einer Dienstlatenz und mindestens einer Dienstbandbreite auf der Grundlage eines Verkehrsdeskriptorparameters, der innerhalb einer dynamischen Bandbreitenzuweisungs-, DBA, -Engine (111) eines Optical Line Terminals, OLT, vorgesehen ist; **dadurch gekennzeichnet, dass**
- wenn die L4S-Übertragungswarteschlange (231) eine Warteschlangenbelegung (221) aufweist, die größer als ein erster Schwellenwert (222) ist, Zuweisen wiederkehrender Übertragungsgelegenheiten (202) zu der L4S-Übertragungswarteschlange, die eine erste zugewiesene Bandbreite (205) zum Übertragen von L4S-Paketen (234) von der L4S-Übertragungswarteschlange zu dem OLT in einem Intervall (203) aufweisen, das höchstens der Dienstlatenz entspricht; und wobei die erste zugewiesene Bandbreite (205) mindestens gleich der Dienstbandbreite ist;
wobei das OLT dazu ausgestaltet ist, in einem passiven optischen Netzwerk mit Optical Network Units, ONUs, zu kommunizieren, die jeweils eine oder mehrere Übertragungswarteschlangen umfassen; und wobei die DBA-Engine dazu ausgestaltet ist, wiederkehrende Übertragungsgelegenheiten zu den jeweiligen Übertragungswarteschlangen zum Übertragen von Paketen von den jeweiligen Übertragungswarteschlangen zu dem OLT zuzuweisen; wobei mindestens eine ONU eine L4S-Übertragungswarteschlage umfasst.

12. Datenverarbeitungssystem, das dazu ausgestaltet ist, das computerimplementierte Verfahren nach Anspruch 11 durchzuführen.

13. Computerprogrammprodukt, das computerausführbare Anweisungen umfasst, die, wenn das Programm von einem Computer ausgeführt wird, den Computer veranlassen, das computerimplementierte Verfahren nach Anspruch 11 durchzuführen.

## Revendications

1. Terminal de ligne optique, OLT, (110), configuré pour communiquer dans un réseau optique passif (100) avec des unités de réseau optique, ONU, (130, 140, 150) qui comprennent respectivement une ou plusieurs files d'attente de transmission (131, 132, 141, 151, 152, 153) ;
dans lequel l'OLT comprend un moteur d'allocation de bande passante dynamique, DBA, (111) configuré pour allouer des opportunités de transmission récurrentes (133, 142, 143, 144, 154, 155) au files d'attente de transmission respectives pour transmettre des paquets des files d'attente de transmission respectives à l'OLT ; dans lequel au moins une ONU (140) comprend une file d'attente de transmission L4S (141) pour transmettre des paquets L4S avec au plus une latence de service et au moins une bande passante de service ; et
**caractérisé en ce que** le moteur DBA est en outre configuré pour effectuer :
- l'identification d'une file d'attente de transmission L4S sur la base d'un paramètre de descripteur de trafic L4S fourni dans le moteur DBA ; et
- si la file d'attente de transmission L4S (231) a une occupation de file d'attente (221) supérieure à un premier seuil (222), l'allocation à la file d'attente de transmission L4S d'opportunités de transmission récurrentes (202) qui ont une première bande passante attribuée (205) pour transmettre des paquets L4S (234) de la file d'attente de transmission L4S à l'OLT à un intervalle (203) correspondant au plus à la latence de service ; et dans lequel la première bande passante attribuée (205) est au moins égale à la bande passante de service.

2. Terminal de ligne optique, OLT, selon la revendication 1, dans lequel le moteur DBA (111) est en outre configuré pour effectuer, si la file d'attente de transmission L4S (231) a une occupation de file d'attente (221) inférieure à un deuxième seuil (223), l'allocation à la file d'attente de transmission L4S d'opportunités de transmission récurrentes (201) qui ont une deuxième bande passante attribuée (204) pour rapporter l'occupation de file d'attente de la file d'attente de transmission L4S à l'OLT.

3. Terminal de ligne optique, OLT, selon l'une des revendications précédentes, dans lequel
l'occupation de file d'attente est rapportée au moyen d'une structure rapport de bande passante dynamique, DBR, en amont (201b, 202b), ou au moyen de données au repos (201c, 202d).

4. Terminal de ligne optique, OLT, selon l'une des revendications précédentes, dans lequel la file d'attente de transmission L4S (501) transmet en outre d'autres paquets (402).

5. Terminal de ligne optique, OLT, selon l'une des revendications précédentes, dans lequel la première bande passante attribuée (205) est égale à la bande passante de service (305) augmentée d'une bande passante excédentaire (306) pour prendre en charge le trafic L4S.

6. Terminal de ligne optique, OLT, selon la revendication 5, dans lequel l'OLT comprend en outre des moyens configurés pour effectuer une estimation de la bande passante excédentaire (306) sur la base d'un ou plusieurs services associés à la file d'attente de transmission L4S, et mettre à jour la bande passante excédentaire.

7. Terminal de ligne optique, OLT, selon l'une des revendications précédentes, dans lequel la première bande passante attribuée (205) est configurée dans le moteur DBA par un débit d'information garanti, AIR.

8. Terminal de ligne optique, OLT, selon la revendication 2, dans lequel le moteur DBA est en outre configuré pour effectuer une augmentation (323) de la bande passante attribuée des opportunités de transmission récurrentes (201, 202) de la deuxième bande passante attribuée (204) à la première bande passante attribuée (205) à la réception d'une occupation de file d'attente rapportée (307) qui dépasse le premier seuil (222).

9. Terminal de ligne optique, OLT, selon la revendication 2, dans lequel le moteur DBA est en outre configuré pour effectuer une diminution (326) de la bande passante attribuée des opportunités de transmission récurrentes (201, 202) de la première bande passante attribuée (205) à la deuxième bande passante attribuée (204) à la réception d'une occupation de file d'attente rapportée qui est inférieure au deuxième seuil ; et dans lequel l'occupation de file d'attente rapportée est incluse dans les opportunités de transmission récurrentes (202) pour transmettre des paquets L4S de la file d'attente de transmission L4S à l'OLT.

10. Terminal de ligne optique, OLT, selon la revendication 9, dans lequel le moteur DBA est en outre configuré pour effectuer un report (304) de la diminution après avoir reçu une occupation de file d'attente rapportée (309) qui est inférieure au deuxième seuil (222) ; et dans lequel le report est basé sur les occupations de file d'attente incluses dans une ou plusieurs opportunités de transmission récurrentes (310, 311) ultérieures.

11. Procédé mis en œuvre par ordinateur comprenant les étapes suivantes :
- identifier une file d'attente de transmission L4S pour transmettre des paquets L4S avec au plus une latence de service et au moins une bande passante de service sur la base d'un paramètre de descripteur de trafic fourni dans un moteur d'allocation de bande passante dynamique, DBA, d'un terminal de ligne optique, OLT ; **caractérisé par**
- si la file d'attente de transmission L4S (231) a une occupation de file d'attente (221) supérieure à un premier seuil (222), l'allocation à la file d'attente de transmission L4S d'opportunités de transmission récurrentes (202) qui ont une première bande passante attribuée (205) pour transmettre des paquets L4S (234) de la file d'attente de transmission L4S à l'OLT à un intervalle (203) correspondant au plus à la latence de service ; et dans lequel la première bande passante attribuée (205) est au moins égale à la bande passante de service ;
dans lequel l'OLT est configurée pour communiquer dans un réseau optique passif avec des unités de réseau optique, ONU, qui comprennent respectivement une ou plusieurs files d'attente de transmission ; et dans lequel le moteur DBA est configuré pour allouer des opportunités de transmission récurrentes aux files d'attente de transmission respectives pour transmettre des paquets des files d'attente de transmission respectives à l'OLT ; dans lequel au moins une ONU comprend une file d'attente de transmission L4S.

12. Système de traitement de données configuré pour effectuer le procédé mis en œuvre par ordinateur selon la revendication 11.

13. Produit de programme informatique comprenant des instructions exécutables par ordinateur qui, lorsque le programme est exécuté par un ordinateur, amènent l'ordinateur à effectuer le procédé mis en œuvre par ordinateur selon la revendication 11.
